# EUROPEAN PATENT APPLICATION

(11) **EP 3 285 234 A1**
(43) Date of publication of application: **21.02.2018**
(21) Application number: 17185853.3
(22) Date of filing: 11.08.2017
(51) Int. Cl.: G07C 9/00

(54) **PORTABLE DEVICE AND ELECTRONIC KEY SYSTEM**

(30) Priority: 15.08.2016 JP 2016159268
(71) Applicant: Kabushiki Kaisha Tokai Rika Denki Seisakusho, Ohguchi-cho Niwa-gun Aichi 480-0195 (JP)
(72) Inventor: ISHIGAKI, Tomohiko, Niwa-gun, Aichi 480-0195 (JP); KAWAMURA, Tetsuya, Niwa-gun, Aichi 480-0195 (JP); KAWAMURA, Masayuki, Niwa-gun, Aichi 480-0195 (JP); KOJIMA, Hiroaki, Niwa-gun, Aichi 480-0195 (JP); SOBUE, Kazunori, Niwa-gun, Aichi 480-0195 (JP)
(74) Representative: TBK

(57) **Abstract**

A portable device (3) used with a communication peer device (2) and carried by a user (SU). The portable device (3) includes an LF reception circuit (32) for receiving a wireless signal (WE) from the communication peer device (2), a vibration sensor that detects vibration of the portable device (3), and a microcomputer (31). The microcomputer (31) allows the reception circuit (32) to receive the wireless signal (WE) when the vibration sensor (34) detects vibration of the portable device (3) and does not allow the receiving means (32) to receive the wireless signal (WE) when a first predetermined time length (T1) elapses without the receiving means (32) of the portable device (3) receiving the wireless signal (WE) and the vibration sensor (34) detecting vibration of the portable device (3).

## Description

The present invention relates to a portable device and an electronic key system.

JP-A-2002-316618 describes an example of a SMART KEY SYSTEM (registered trademark) that establishes bidirectional communication between a vehicle and a portable device (an electronic key device), which is held by a user, to perform key verification. When key verification is accomplished, the SMART KEY SYSTEM unlocks a door. For example, the vehicle monitors the approach of the portable device by transmitting a low-frequency (LF) signal from an LF antenna of the vehicle to form an LF communication area around a door. When the user who is carrying the portable device enters the LF communication area, the portable device transmits a radio frequency (RF) signal in response to the LF signal. The vehicle analyzes the RF signal to perform key verification and allows the door to be unlocked when the key verification is accomplished. The door unlocks when the user touches the door handle.

If the portable device is always in a standby state in which the LF signal can constantly be received, the standby current drains the battery of the portable device and shortens the battery life. Further, communication may be established between the portable device and the vehicle without the user knowing.

It is an object of the present invention to provide an electronic key system that allows the standby current to be reduced and an electronic key system including such a portable device.

One aspect of the present invention is a portable device used with a communication peer device and configured to be carried by a user. The portable device includes a receiving means for receiving a wireless signal from the communication peer device, a vibration sensor configured to detect vibration of the portable device, and a controlling means including a reception enablement mode that allows the receiving means to receive the wireless signal and a reception disablement mode that does not allow the receiving means to receive the wireless signal. The controlling means is configured to shift the portable device to the reception enable mode when the vibration sensor detects vibration of the portable device. When the portable device is in the reception enablement mode and a first predetermined time length elapses without the receiving means of the portable device receiving the wireless signal and the vibration sensor detecting vibration of the portable device, the controlling means is configured to shift the portable device to the reception disablement mode.

The portable device shifts to the reception enablement mode when detecting vibration of the portable device. Then, in the reception enablement mode, if the portable device does not receive the wireless signal and the first predetermined time length elapses without the portable device receiving the wake signal and vibration being detected, the portable device shifts to the reception disablement mode. In the reception disablement mode, the current consumed by the receiving means is substantially zero. Thus, the standby current of the portable device can be reduced. This prolongs the battery lift of the portable device that may be stored in a still state free from vibration over a long period of time at a location that cannot be reached by the wireless signal. The establishment of communication without the user knowing is limited between the portable device and the communication peer device. This improves the security of an electronic key system.

In a second aspect of the present invention, the controlling means is configured to start a timer when the vibration sensor detects vibration of the portable device. The controlling means is configured so that after the timer is started, the controlling means shifts the portable device to the reception disablement mode if a measured time of the timer reaches the first predetermined time length without the receiving means receiving the wireless signal and the vibration sensor detecting vibration of the portable device. The controlling means is configured so that after the timer is started and before the measured time of the timer reaches the first predetermined time length, the controlling means restarts the time counter when the receiving means receives the wireless signal or vibration of the portable device is detected.

When the portable device is in the reception enablement mode, the timer is restarted whenever the portable device receives the wireless signal from the communication peer device or vibration of the portable device is detected. Thus, the portable device does not shift to the reception disablement mode when in use.

A third aspect of the present invention is an electronic key system including the portable device. The electronic key system is allowed to control the communication peer device when the wireless signal transmitted from the communication peer device starts and establishes bidirectional communication with the communication peer device and key verification performed through the bidirectional communication authenticates the portable device. The controlling means of the portable device includes a reception enablement mode that allows the receiving means to receive the wireless signal and a reception disablement mode that does not allow the receiving means to receive the wireless signal but allows the receiving means to receive a command signal which is transmitted from the communication peer device and is different from the wireless signal. When the portable device is in the reception enablement mode and the first predetermined time length elapses without the receiving means receiving the wireless signal and the vibration sensor detecting vibration of the portable device, the controlling means of the portable device is configured to shift the portable device to the reception disablement mode. When the portable device is in the reception disablement mode and the receiving means receives the command signal, the controlling means of the portable device is configured to shift the portable device to the reception enablement mode.

When the portable device is in the reception disablement mode, the portable device cannot receive the wireless signal that starts bidirectional communication. Thus, the portable device does not transmit a bidirectional communication signal. This prevents a person from relaying the bidirectional communication, which is transmitted from the portable device, with a relay. The portable device is configured to shift from the reception disablement mode to the reception enablement mode upon receipt of the command signal. Thus, when the user intentionally operates the portable device, bidirectional communication can be established. Accordingly, the electronic key system improves security and convenience.

In a fourth aspect of the present invention, the communication peer device is configured to transmit the command signal in a fixed interval or in a temporarily manner when assumed that the portable device has entered a predetermined room. When the receiving means receives the command signal under a situation in which the portable device is assumed as having entered the predetermined room in the reception enablement mode, the controlling means of the portable device is configured to switch the first predetermined time length from an exterior time length, which is set assuming that the portable device is located outside the room, to an interior time length, which is set assuming that the portable device is located inside the room.

When the user who is carrying the portable device enters the room, the controlling means switches the first predetermined time length from the exterior time length to the interior time length. Thus, when the user intentionally operates the portable device, the establishment of bidirectional communication is ensured, and the control of the vehicle is ensured.

In a fifth aspect of the present invention, the communication peer device is configured to transmit the command signal in the fixed interval or in a temporarily manner when assumed that the portable device has left the predetermined room. When the receiving means receives the command signal under a situation in which the portable device is assumed as having left the predetermined room in the reception enablement mode, the controlling means of the portable device is configured to return the first predetermined time length from the interior time length to the exterior time length.

When the user who is carrying the portable device leaves the room, the controlling means switches the first predetermined time length from the interior time length to the exterior time length. This prevents tampering of the portable device with a relay.

In a sixth aspect of the present invention, the communication peer device is configured to transmit the command signal at a fixed interval that is shorter than the first predetermined time length.

This configuration ensures that the portable device receives the command signal from the communication peer device. Thus, when the user intentionally operates the portable device, bidirectional communication is established and the communication peer device can be controlled.

In a seventh aspect of the present invention, the command signal is an existing command transmitted by the communication peer device to the portable device through the bidirectional communication between the communication peer device and the portable device.

The command signal, which is a dedicated command, is used so that the portable device does not shift to the reception disablement mode under an environment in which the dedicated command can be received. Thus, when the user intentionally operates the portable device, bidirectional communication is established and the vehicle can be controlled.

In an eighth aspect of the present invention, the command signal is a dedicated command that differs from an existing command transmitted by the communication peer device to the portable device through the bidirectional communication between the communication peer device and the portable device.

The command signal, which is a dedicated command, is used so that the portable device does not shift to the reception disablement mode under an environment in which the dedicated command can be received. Thus, when the user intentionally operates the portable device, bidirectional communication is established and the vehicle can be controlled.

In a ninth aspect of the present invention, the dedicated command includes a rolling command that is count up or count down whenever transmission occurs. When the receiving means receives the dedicated command including the rolling counter that is count up whenever transmission occurs and the rolling counter in the dedicated command received by the receiving means in the reception disablement mode is greater than a portable device counter stored in a memory, the controlling means of the portable device stores the rolling counter as a new portable device counter in the memory and shifts the portable device to the reception enablement mode. When the receiving means receives the dedicated command including the rolling counter that is count down whenever transmission occurs and the rolling counter in the dedicated command received by the receiving means in the reception disablement mode is less than a portable device counter stored in a memory, the controlling means stores the rolling counter as a new portable device counter in the memory and shifts the portable device to the reception enablement mode.

Whenever a dedicated command is transmitted, the command may be changed. This prevents unauthorized copying of the dedicated command.

In a tenth aspect of the present invention, when the portable device is in the reception enablement mode and the first predetermined time length elapses without the receiving means of the portable device receiving the wireless signal and the vibration sensor detecting vibration of the portable device, the controlling means of the portable device shifts the portable device to the reception disablement mode that allows the command signal transmitted from the communication peer device to be received but does not allow the wireless signal to be received. When the portable device is in reception disablement mode and a second predetermined time length, which is longer than the first predetermined time length), elapses without the receiving means of the portable device receiving the wireless signal and the vibration sensor detecting vibration of the portable device, the controlling means shifts the portable device to a complete reception disablement mode that does not allow the receiving means to receive both of the wireless signal and the command signal.

The complete reception disablement mode restricts the receipt of the wireless signal and the command signal from the communication peer device. Thus, the current consumed by the portable device is further reduced from the reception disablement mode. Accordingly, standby current of the portable device is further reduced. Nevertheless, the second predetermined time length is set to be longer than the first predetermined time length. Thus, the first predetermined time length is short, which is when signals can be relayed in an unauthorized manner with a relay. Further, the second predetermined time length is long so that bidirectional communication can be established when the user intentionally operates the portable device. This improves security and convenience. When vibration of the portable device is detected in the complete reception disablement mode, the portable device is shifted to the reception enablement mode. This allows the wake signal from the vehicle 2 to be received and establishes bidirectional communication.

An eleventh aspect of the present invention is an electronic key system including the portable device. The electronic key system is allowed to control the communication peer device when the wireless signal transmitted from the communication peer device starts and establishes bidirectional communication with the communication peer device and key verification performed through the bidirectional communication authenticates the portable device. When the portable device is in the reception enablement mode and the first predetermined time length elapses without the receiving means receiving the wireless signal and the vibration sensor detecting vibration of the portable device, the controlling means of the portable device is configured to transmit a query signal to the communication peer device to inquire whether or not the portable device can be shifted to the reception disablement mode. When the receiving means receives a shift restriction signal from the communication peer device in response to the query signal, the controlling means of the portable device is configured to maintain the portable device in the reception enable mode instead of shifting to the reception disablement mode. When the receiving means does not receive the shift restriction signal, the controlling means of the portable device is configured to shift the portable device to the reception disablement mode.

When the portable device is in an environment in which the shift restriction signal can be received from the communication peer device, the portable device is not shifted to the reception disablement mode. Thus, when the user intentionally operates the portable device, bidirectional communication is established and the communication peer device can be controlled.

The invention, together with objects and advantages thereof, may best be understood by reference to the following description of the presently preferred embodiments together with the accompanying drawings in which:
Fig. 1 is a block diagram of an electronic key system in a first embodiment;
Fig. 2 is a diagram of showing modes of a portable device in the first embodiment.
Fig. 3 is a diagram showing modes of the portable device in a second embodiment.

### First Embodiment

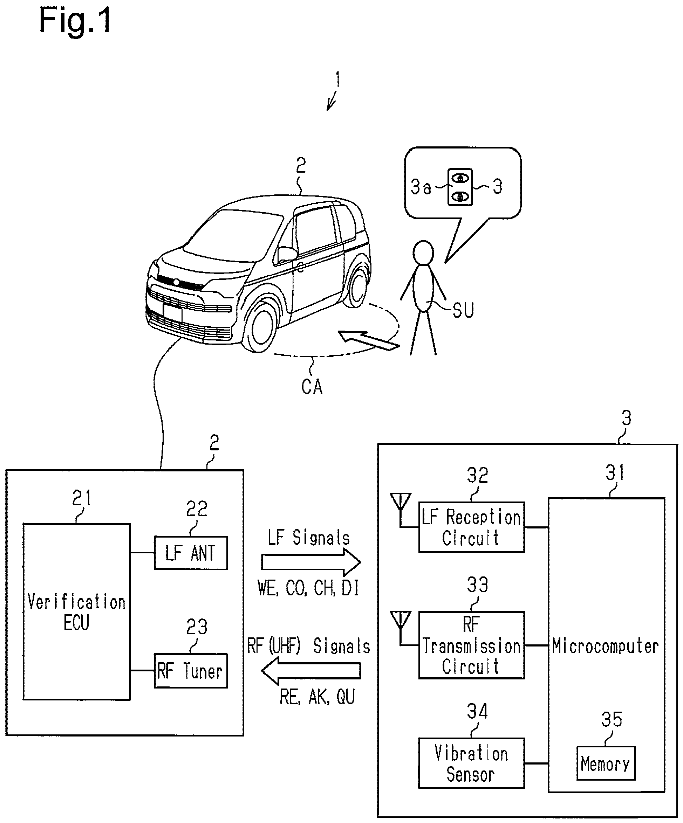

Referring to Fig. 1, in a first embodiment, an electronic key system 1, which may be the SMART KEY SYSTEM (registered trademark), establishes bidirectional communication between a vehicle 2 and a portable device 3 to perform key verification. When key verification is accomplished, the electronic key system 1 allows a door to be unlocked.

The vehicle 2 includes a verification ECU 21, an LF antenna 22, and an RF tuner 23. The verification ECU 21 is configured to manage security control of the vehicle 2. The LF antenna 22 is capable of transmitting one or more LF signals (e.g., radio waves on LF band). The RF tuner 23 is capable of receiving one or more RF signals (e.g., radio waves on UHF band). As will be described later, the one or more LF signals may include some or all of a wake signal WE, a command signal CO, a challenge signal CH, and a shift restriction signal DI. The one or more RF signals may include some or all of a response signal RE, an acknowledgement signal AK, and a query signal QU. The vehicle 2 is one example of a communication peer device.

The verification ECU 21 monitors the approaching of the portable device 3 toward the vehicle 2 by transmitting the wake signal WE, which is one of the LF signals, from the LF antenna 22 and forming an LF communication area CA around a door. When a user SU, who is carrying the portable device 3, enters the LF communication area CA, the portable device 3 receives the wake signal WE and establishes bidirectional communication as long as the portable device 3 is in a reception enablement mode Ma, which allows the wake signal WE to be received. The wake signal WE is one example of a wireless signal that initiates bidirectional communication. During the bidirectional communication, the portable device 3 transmits the response signal RE, which contains a key ID unique to the portable device 3, as one of the RF signals.

The key ID of the portable device 3 is registered to the verification ECU 21. When the RF tuner 23 receives the response signal RE, the verification ECU 21 verifies the key ID contained in the response signal RE with the registered key ID. When the key IDs match, the verification ECU 21 permits the unlocking of the door. The door unlocks when the user SU touches the door handle.

In addition to the wake signal WE, the verification ECU 21 transmits the command signal CO as one of the LF signals from the LF antenna 22. Preferably, the command signal CO is a dedicated command containing a rolling counter of a bit string that is counted up whenever transmission occurs. The command signal CO is transmitted at a controlled, fixed interval (e.g., twenty seconds) to avoid interference with other LF signals such as the wake signal WE.

The portable device 3 includes a microcomputer 31, an LF reception circuit 32, an RF transmission circuit 33, and a vibration sensor 34. The microcomputer 31 controls the operation of the portable device 3. The LF reception circuit 32 is configured to receive the LF signal. The RF transmission circuit 33 is configured to transmit the RF signal. The vibration sensor 34 is configured to detect vibration of the portable device 3. The portable device 3 is powered by a replaceable battery.

The microcomputer 31 may include a reception enablement mode Ma, a reception disablement mode Mb, and a complete reception disablement mode Mc. The microcomputer 31 selectively shifts the portable device 3 to one of the reception enablement mode Ma, the reception disablement mode Mb, and the complete reception disablement mode Mc. In the reception enablement mode Ma, the LF reception circuit 32 can receive the wake signal WE. In the reception disablement mode Mb, the LF reception circuit 32 can receive the command signal CO but not the wake signal WE. In the complete reception disablement mode Mc, the LF reception circuit 32 cannot receive any of the LF signals. The reception disablement mode Mb consumes less power than the reception enablement mode Ma. The complete reception disablement mode Mc consumes less power than the reception disablement mode Mb. In some implementations, the reception enablement mode Ma, the reception disablement mode Mb, and the complete reception disablement mode Mc may be referred to as a key device receiver active mode Ma, a key device receiver sleep mode Mb, and a key device receiver shut-down mode Mc, respectively.

When the microcomputer 31 receives the wake signal WE with the LF reception circuit 32 during the reception enablement mode Ma, the microcomputer 31 transmits the acknowledgement signal AK from the RF transmission circuit 33 as one of the RF signals. When the microcomputer 31 receives the challenge signal CH, which is one of the LF signals, during the reception enablement mode Ma with the LF reception circuit 32, the microcomputer 31 transmits the response signal RE from the RF transmission circuit 33. The LF reception circuit 32 is one example of a receiving means. The microcomputer 31 is one example of a controlling means.

The microcomputer 31 includes a memory 35 that stores a portable device counter. When the rolling counter contained in the command signal CO received by the LF reception circuit 32 during the reception disablement mode Mb is greater than the portable device counter stored in the memory 35, the microcomputer 31 stores the rolling counter as a new portable device counter in the memory 35. Then, the microcomputer 31 shifts the portable device 3 to the reception enablement mode Ma.

In the illustrated embodiment, the portable device 3 includes at least one switch 3a, which may be a push button, to instruct the vehicle 2 to lock or unlock the door. The switch 3a may be a REMOTE KEYLESS ENTRY (registered trademark) switch. When the switch 3a of the portable device 3 is operated or the LF reception circuit 32 receives the wake signal WE, the microcomputer 31 shifts the portable device 3 to a communication operation mode that is included in the reception enablement mode Ma. In the communication operation mode, the portable device 3 functions as a transmitter configured to establish unidirectional communication with the vehicle 2 or bidirectional communication between the portable device 3 and the vehicle 2.

The operation of the portable device 3 will now be described. The portable device 3 may be located outside the LF communication area CA, for example, in the residence of the user SU stored in a still state free from vibration. In this case, the portable device 3 is shifted to the complete reception disablement mode Mc.

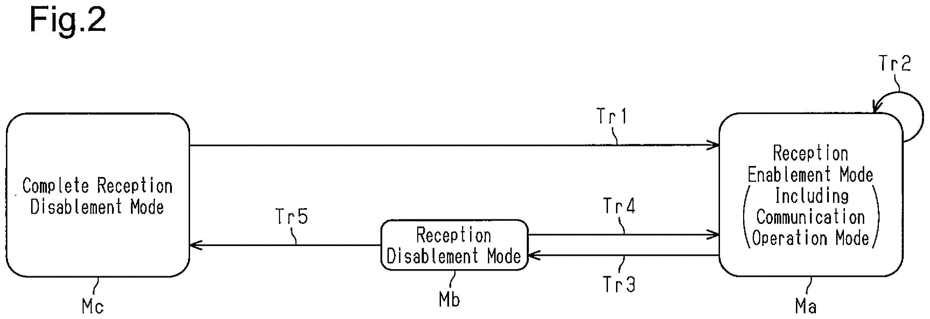

Referring to Fig. 2, when vibration of the portable device 3 is detected in the complete reception disablement mode Mc and/or when operation of the switch 3a on the portable device 3 is detected in the complete reception disablement mode Mc, the microcomputer 31 shifts the portable device 3 to the reception enablement mode Ma (mode transition Tr1). In other words, the transition condition for the mode transition Tr1 is that at least one of (1 a) and (1 b) is satisfied: (1 a) detection of vibration of the portable device 3 in the complete reception disablement mode Mc and (1b) detection of operation to the switch 3a in the complete reception disablement mode Mc. For example, when operation of the switch 3a on the portable device 3 is detected in the complete reception disablement mode Mc, the microcomputer 31 shifts the portable device 3 to the communication operation mode in the reception enablement mode Ma. The microcomputer 31 starts a timer when the portable device 3 is shifted to the reception enablement mode Ma (communication operation mode). The timer measures the duration of the reception enablement mode Ma.

In the reception enablement mode Ma, when vibration of the portable device 3 is detected, the switch 3a on the portable device 3 is operated, or the LF reception circuit 32 receives an LF signal, the microcomputer 31 restarts the timer (mode transition Tr2). This restarts and resets the timer. In other words, the transition condition for the mode transition Tr2 is that at least one of (2a)-(2c) is satisfied: (2a) detection of vibration of the portable device 3 in the reception enablement mode Ma; (2b) detection of operation to the switch 3a in the reception enablement mode Ma; and (2c) reception of an LF signal by the LF reception circuit 32 in the reception enablement mode Ma.

In the reception enablement mode Ma, in a case in which vibration of the portable device 3 is not detected, the switch 3a on the portable device 3 is not operated, and the LF reception circuit 32 does not receive an LF signal, if the length of the time measured by the timer reaches a first predetermined time length T1 (e.g., sixty seconds, also referred to as the first threshold value), the microcomputer 31 shifts the portable device 3 to the reception disablement mode Mb (mode transition Tr3). The microcomputer 31 starts the timer when shifting the portable device 3 to the reception disablement mode Mb. The timer measures the duration of the reception disablement mode Mb. In other words, the transition condition for the mode transition Tr3 is that (3a)-(3c) are all satisfied: (3a) non-detection of vibration of the portable device 3 for the time length T1 in the reception enablement mode Ma; (3b) non-detection of operation to the switch 3a for the time length T1 in the reception enablement mode Ma; and (3c) non-reception of an LF signal by the LF reception circuit 32 for the time length T1 in the reception enablement mode Ma.

In the reception disablement mode Mb, when vibration of the portable device 3 is detected, the switch 3a on the portable device 3 is operated, or the LF reception circuit 32 receives the command signal CO, the microcomputer 31 shifts the portable device 3 to the reception enablement mode Ma (mode transition Tr4). That is, the transition condition for the mode transition Tr4 is that at least one of (4a)-(4c) is satisfied: (4a) detection of vibration of the portable device 3 within the period of the time length T2 in the reception disablement mode Mb; (4b) detection of operation to the switch 3a within the period of the time length T1 in the reception disablement mode Mb; and (4c) reception of an LF signal by the LF reception circuit 32 within the period of the time length T1 in the reception disablement mode Mb. In the reception disablement mode Mb, in a case in which vibration of the portable device 3 is not detected, the switch 3a on the portable device 3 is not operated, and the LF reception circuit 32 does not receive the command signal CO, if the length of the time measured by the timer reaches a second predetermined time length T2 (e.g., one hour, also referred to as the second threshold value), the microcomputer 31 shifts the portable device 3 to the complete reception disablement mode Mc (mode transition Tr5). That is, the transition condition for the mode transition Tr5 is that (5a)-(5c) are all satisfied: (5a) non-detection of vibration of the portable device 3 for the time length T2 in the reception disablement mode Mb; (5b) non-detection of operation to the switch 3a for the time length T2 in the reception disablement mode Mb; and (5c) non-reception of an LF signal by the LF reception circuit 32 for the time length T2 in the reception disablement mode Mb.

The first embodiment has the advantages described below.
(1) The portable device 3 shifts to the reception enablement mode Ma when detecting vibration of the portable device 3. Then, in the reception enablement mode Ma, if the first predetermined time length T1 (e.g., sixty seconds) elapses without the portable device 3 receiving the wake signal WE and vibration being detected, the portable device 3 shifts to the reception disablement mode Mb. In the reception disablement mode Mb, the current consumed by the LF reception circuit 32 is substantially zero. Thus, the standby current of the portable device 3 can be reduced. This prolongs the battery life of the portable device 3 that may be stored in a still state free from vibration over a long period of time at a location that cannot be reached by the wake signal WE. The effect for prolonging the battery life is more significant for a sub-key than a master key because the user carries the sub-key less frequently. Further, the establishment of communication without the user SU knowing is limited between the portable device 3 and the vehicle 2 (verification ECU 21). This improves the security of the electronic key system 1.
(2) When the portable device 3 is in the reception enablement mode Ma, the timer is restarted (Tr2) whenever the portable device 3 receives the wake signal WE or vibration of the portable device 3 is detected. Thus, the portable device 3 does not shift to the reception disablement mode Mb when in use.
(3) When the portable device 3 is in the reception disablement mode Mb, the portable device 3 cannot receive the wake signal WE that starts bidirectional communication. Thus, the portable device 3 does not transmit an RF signal (e.g., response signal RE), which is used for bidirectional communication. This prevents a person from relaying a bidirectional communication RF signal, which is transmitted from the portable device 3, with a relay. The portable device 3 is configured to shift from the reception disablement mode Mb to the reception enablement mode Ma upon receipt of the command signal CO. Thus, when the user SU intentionally operates the portable device 3, bidirectional communication can be established. Accordingly, the electronic key system 1 improves security and convenience.
(4) In the first embodiment, the vehicle 2 transmits the command signal CO at a fixed interval (e.g., twenty seconds), which is shorter than the first predetermined time length T1 (e.g., sixty seconds). This ensures that the portable device 3 receives the command signal CO from the vehicle 2 and ensures that the portable device 3 does not shift to the reception disablement mode Mb in an environment in which the command signal CO can be received. Thus, when the user SU intentionally operates the portable device 3, the establishment of bidirectional communication is ensured, and the control of the vehicle 2 is ensured.
(5) The command signal CO, which is a dedicated command, is used so that the portable device 3 does not shift to the reception disablement mode Mb under an environment in which the dedicated command can be received. Thus, when the user SU intentionally operates the portable device 3, bidirectional communication is established and the vehicle 2 can be controlled.
(6) The dedicated command may be renewed whenever transmitted. This prevents unauthorized copying of the dedicated command.
(7) The complete reception disablement mode Mc restricts the receipt of the wake signal WE and the command signal CO from the vehicle 2. Thus, the current consumed by the LF reception circuit 32 is further reduced from the reception disablement mode Mb. Accordingly, standby current of the portable device 3 is further reduced. Nevertheless, the second predetermined time length T2 (e.g., one hour) is set to be longer than the first predetermined time length T1 (e.g., sixty seconds). Thus, the first predetermined time length T1 is short, which is when signals can be relayed in an unauthorized manner with a relay. Further, the second predetermined time length T2 is long so that bidirectional communication can be established when the user SU intentionally operates the portable device 3. This improves security and convenience. In the illustrated embodiment, when vibration of the portable device 3 is detected in the complete reception disablement mode Mc, the portable device 3 is shifted to the reception enablement mode Ma. This allows the wake signal WE from the vehicle 2 to be received and establishes bidirectional communication.

### Second Embodiment

The second embodiment differs from the first embodiment in that the vehicle 2 does not transmit the command signal CO. Thus, the microcomputer 31 of the portable device 3 selectively shifts the portable device 3 between the reception enablement mode Ma (including communication operation mode), which allows the LF reception circuit 32 to receive the wake signal WE, and the reception disablement mode Mb, which does not allow the LF reception circuit 32 to receive the wake signal WE.

The operation of the portable device 3 will now be described. The portable device 3 may be located outside the LF communication area CA, for example, in the residence of the user SU stored in a still state free from vibration. In this case, the portable device 3 is shifted to the reception disablement mode Mb.

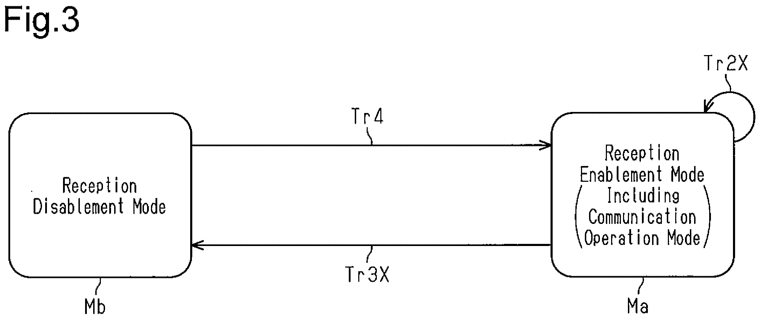

Referring to Fig. 3, when vibration of the portable device 3 is detected in the reception disablement mode Mb and/or when the switch 3a on the portable device 3 is operated in the reception disablement mode Mb, the microcomputer 31 shifts the portable device 3 to the communication operation mode in the reception enablement mode Ma (Tr4). The portable device 3 starts the timer when shifting the microcomputer 31 to the reception enablement mode Ma.

In the reception enablement mode Ma, when vibration of the portable device 3 is detected, the switch 3a on the portable device 3 is operated, or the LF reception circuit 32 receives an LF signal, the microcomputer 31 restarts the timer (mode transition Tr2X). In the reception enablement mode Ma, in a case in which vibration of the portable device 3 is not detected, the switch 3a on the portable device 3 is not operated, and the LF reception circuit 32 does not receive an LF signal, if the length of the time measured by the timer reaches the first predetermined time length T1 (e.g., sixty seconds, also referred to as the first threshold value), the microcomputer 31 transmits the query signal QU, which is one of the RF signals, from the RF transmission circuit 33 to inquire whether or not the portable device 3 can be shifted to the reception disablement mode Mb. When the RF tuner 23 receives the query signal QU, the verification ECU 21 of the vehicle 2 transmits the shift restriction signal DI, which is one of the LF signals, from the LF antenna 22. In the reception enablement mode Ma, the microcomputer 31 also restarts the timer when the LF reception circuit 32 receives the shift restriction signal DI (Tr2X). In other words, the transition condition for the mode transition Tr2X is that at least one of (2a)-(2d) is satisfied: (2a) detection of vibration of the portable device 3 in the reception enablement mode Ma; (2b) detection of operation to the switch 3a in the reception enablement mode Ma; (2c) reception of an LF signal by the LF reception circuit 32 in the reception enablement mode Ma; and (2d) reception of a reply signal (DI) from the vehicle 1 in response to the query signal QU.

In the reception enablement mode Ma, if the LF reception circuit 32 does not receive the shift restriction signal DI even though the RF transmission circuit 33 has transmitted the query signal QU, the microcomputer 31 shifts the portable device 3 to the reception disablement mode Mb (mode transition Tr3X). In other words, the transition condition for the mode transition Tr3X is that (3a)-(3d) are all satisfied: (3a) non-detection of vibration of the portable device 3 for the time length T1 in the reception enablement mode Ma; (3b) non-detection of operation to the switch 3a for the time length T1 in the reception enablement mode Ma; (3c) non-reception of an LF signal by the LF reception circuit 32 for the time length T1 in the reception enablement mode Ma; and (3d) non-reception of a reply signal (DI) from the vehicle 1 in response to the query signal QU.

The second embodiment has the advantages described below. (8) When the portable device 3 is in an environment in which the shift restriction signal DI can be received from the vehicle 2, the portable device 3 is not shifted to the reception disablement mode Mb. Thus, when the user SU intentionally operates the portable device 3, bidirectional communication is established and the vehicle 2 can be controlled.

The first and second embodiments may be modified as described below.

In the first embodiment, the command signal CO transmitted from the vehicle 2 may be a dedicated command containing a rolling counter that is counted down whenever transmission occurs. In this case, when the rolling counter contained in the command signal CO received by the LF reception circuit 32 during the reception disablement mode Mb is less than the portable device counter stored in the memory 35, the microcomputer 31 of the portable device 3 stores the rolling counter as a new portable device counter in the memory 35. Then, the microcomputer 31 shifts the portable device 3 to the reception enablement mode Ma.

In the first embodiment, the command signal CO transmitted from the vehicle 2 may be an existing command transmitted from the vehicle 2 to the portable device 3 during bidirectional communication. The existing command is used so that when the portable device 3 is in an environment in which the existing command can be received, the portable device 3 is not shifted to the reception disablement mode Mb. Thus, when the user SU intentionally operates the portable device 3, bidirectional communication is established and the vehicle 2 can be controlled.

The first predetermined time length T1 in the first embodiment and the first predetermined time length T1 in the second embodiment may be the same or different and are not limited to sixty seconds. A shorter first predetermined time length shortens the time during which signals can be relayed in an unauthorized manner with a relay and improves security.

The second predetermined time length T2 of the first embodiment is not limited to one hour. A shorter first predetermined time length T1 and/or a longer second predetermined time length T2 improves security. Further, when the user SU intentionally operates the portable device 3, the long period during which bidirectional communication is established improves convenience.

In the first embodiment, the reception disablement mode Mb, which allows the command signal CO to be received but does not allow the wake signal WE to be received, can be omitted. Further, in the reception enablement mode Ma, in a case in which vibration of the portable device 3 is not detected, the switch 3a on the portable device 3 is not operated, and the first predetermined time length T1 elapses without an LF signal being received by the LF reception circuit 32, the portable device 3 can be shifted to the complete reception disablement mode Mc (e.g., new reception disablement mode Mb).

In this case, in the same manner as the first embodiment, the first predetermined time length T1 is set to sixty seconds, and the transmission interval of the command signal CO is set to twenty seconds. Thus, the portable device 3 would have three opportunities to receive the command signal CO before the first predetermined time length T1 elapses. More opportunities for receiving the command signal CO ensures that the portable device 3 shifts to the reception disablement mode Mb. For example, when increasing the opportunities for receiving the command signal CO, the first predetermined time length T1 may be set to sixty seconds like in the first embodiment, and the transmission interval of the command signal CO may be set to, for example, fifteen seconds, which is shorter than twenty seconds. This allows the desired level of security to be obtained in accordance with the setting of the first predetermined time length T1. Further, an increase in the signal receiving opportunities improves convenience.

In the first embodiment, when the LF reception circuit 32 receives the command signal CO as the user SU enters the passenger compartment during the reception enablement mode Ma, the first predetermined time length T1 (e.g., sixty seconds) may be set to a longer time length such as eight hours or may be set to an infinite amount of time as long as the portable device 3 remains in the passenger compartment. In this case, the first predetermined time length T1 may be returned to a default vale (e.g., sixth seconds) when the LF reception circuit 32 receives the command signal CO as the user SU leaves the passenger compartment during the reception enablement mode Ma. The default value of the first predetermined time length T1 (e.g., sixty seconds) in one example of a vehicle exterior time length T1 a is set under the assumption that the portable device 3 is located outside the passenger compartment. The changed value of the first predetermined time length (eight hours or infinite time) is one example of a vehicle interior time length T1 b set under the assumption that the portable device 3 is located inside the passenger compartment.

In this case, when the user SU, who is carrying the portable device 3, enters the passenger compartment, the user SU intentionally operates the portable device 3 to establish bidirectional communication using the vehicle interior time length T1b. When the user SU, who is holding the portable device 3, leaves the passenger compartment, the vehicle exterior time length T1 a is used to counter unauthorized actions performed with a relay. For example, it can be assumed that the user SU has entered or left the vehicle if the opening and closing of a door is detected when transmitting the command signal CO from the vehicle 2 in a fixed intervals or in a temporarily manner.

When the vibration sensor 34 detects vibration of the portable device 3, the vibration detected by the vibration sensor 34 may be compared with a threshold value for determining vibration.

Preferably, the LF signals used in the communication between the portable device 3 and the vehicle 2 have lower frequencies than the RF signals. However, the LF signals do not have to be in the low-frequency band.
The communication peer device is not limited to the vehicle 2. The communication peer device including the verification ECU 21, the LF antenna 22, and the RF tuner 23 may be a non-vehicle device such as a building including a door (particularly, door lock), lighting, and electrical appliances. For example, an LF signal transmitted from the LF antenna 22 of a building starts bidirectional communication. The receipt of the LF signal by the portable device 3 establishes bidirectional communication. Key verification is performed through bidirectional communication to verify the authenticity of the portable device 3. Verification of the authenticity of the portable device enables control of the door (e.g., door lock), lighting, electrical appliances, and the like in the building.

A portable device (3) used with a communication peer device (2) and carried by a user (SU). The portable device (3) includes an LF reception circuit (32) for receiving a wireless signal (WE) from the communication peer device (2), a vibration sensor that detects vibration of the portable device (3), and a microcomputer (31). The microcomputer (31) allows the reception circuit (32) to receive the wireless signal (WE) when the vibration sensor (34) detects vibration of the portable device (3) and does not allow the receiving means (32) to receive the wireless signal (WE) when a first predetermined time length (T1) elapses without the receiving means (32) of the portable device (3) receiving the wireless signal (WE) and the vibration sensor (34) detecting vibration of the portable device (3).

## Claims

1. A portable device (3) used with a communication peer device (2) and configured to be carried by a user (SU), the portable device (3) including:
a receiving means (32) for receiving a wireless signal (WE) from the communication peer device (2); and
a vibration sensor (34) configured to detect vibration of the portable device (3); the portable device (3) being **characterized by**
a controlling means (31) including a reception enablement mode (Ma) that allows the receiving means (32) to receive the wireless signal (WE) and a reception disablement mode (Mb) that does not allow the receiving means (32) to receive the wireless signal (WE), wherein
the controlling means (31) is configured to shift the portable device (3) to the reception enable mode (Ma) when the vibration sensor (34) detects vibration of the portable device (3), and
when the portable device (3) is in the reception enablement mode (Ma) and a first predetermined time length (T1) elapses without the receiving means (32) of the portable device (3) receiving the wireless signal (WE) and the vibration sensor (34) detecting vibration of the portable device (3), the controlling means (31) is configured to shift the portable device (3) to the reception disablement mode (Mb).

2. The portable device (3) according to claim 1, **characterized in that**:
the controlling means (31) is configured to start a timer when the vibration sensor detects vibration of the portable device;
the controlling means (31) is configured so that after the timer is started, the controlling means (31) shifts the portable device (3) to the reception disablement mode (Mb) if a measured time of the timer reaches the first predetermined time length (T1) without the receiving means (32) receiving the wireless signal (WE) and the vibration sensor (34) detecting vibration of the portable device (3); and
the controlling means (31) is configured so that after the timer is started and before the measured time of the timer reaches the first predetermined time length (T1), the controlling means (31) restarts the time counter (Tr2: Tr2X) when the receiving means (32) receives the wireless signal (WE) or vibration of the portable device (3) is detected.

3. An electronic key system (1) including the portable device (3) according to claim 1 or 2, wherein the electronic key system (1) is allowed to control the communication peer device (2) when the wireless signal (WE) transmitted from the communication peer device (2) starts and establishes bidirectional communication with the communication peer device (2) and key verification performed through the bidirectional communication authenticates the portable device (3), the electronic key system (1) being **characterized in that**:
the controlling means (31) of the portable device (3) includes a reception enablement mode (Ma) that allows the receiving means (32) to receive the wireless signal (WE) and a reception disablement mode (Mb) that does not allow the receiving means (32) to receive the wireless signal (WE) but allows the receiving means (32) to receive a command signal (CO) which is transmitted from the communication peer device (2) and is different from the wireless signal (WE);
when the portable device (3) is in the reception enablement mode (Ma) and the first predetermined time length (T1) elapses without the receiving means (32) receiving the wireless signal (WE) and the vibration sensor (34) detecting vibration of the portable device (3), the controlling means (31) of the portable device (3) is configured to shift the portable device (3) to the reception disablement mode (Mb) (Tr3; Tr3X); and
when the portable device (3) is in the reception disablement mode (Mb) and the receiving means (32) receives the command signal (CO), the controlling means (31) of the portable device (3) is configured to shift the portable device (3) to the reception enablement mode (Ma).

4. The electronic key system (1) according to claim 3, **characterized in that**:
the communication peer device (2) is configured to transmit the command signal (CO) in a fixed interval or in a temporarily manner when assumed that the portable device (3) has entered a predetermined room; and
when the receiving means (32) receives the command signal (CO) under a situation in which the portable device (3) is assumed as having entered the predetermined room in the reception enablement mode (Ma), the controlling means (31) of the portable device (3) is configured to switch the first predetermined time length (T1) from an exterior time length (T1 a), which is set assuming that the portable device (3) is located outside the room, to an interior time length (T1 b), which is set assuming that the portable device (3) is located inside the room.

5. The electronic key system according to claim 4, **characterized in that**:
the communication peer device (2) is configured to transmit the command signal (CO) in a fixed interval or in a temporarily manner when assumed that the portable device (3) has left the predetermined room; and
when the receiving means (32) receives the command signal (CO) under a situation in which the portable device (3) is assumed as having left the predetermined room in the reception enablement mode (Ma), the controlling means (31) of the portable device (3) is configured to return the first predetermined time length (T1) from the interior time length (T1 b) to the exterior time length (T1 a).

6. The electronic key system (1) according to any one of claims 3 to 5, **characterized in that** the communication peer device (2) is configured to transmit the command signal (CO) at a fixed interval that is shorter than the first predetermined time length (T1).

7. The electronic key system (1) according to any one of claims 3 to 6, **characterized in that** the command signal (CO) is an existing command transmitted by the communication peer device (2) to the portable device (3) through the bidirectional communication between the communication peer device (2) and the portable device (3).

8. The electronic key system (1) according to any one of claims 3 to 6, **characterized in that** the command signal (CO) is a dedicated command that differs from an existing command transmitted by the communication peer device (2) to the portable device (3) through the bidirectional communication between the communication peer device (2) and the portable device (3).

9. The electronic key system (1) according to claim 8, **characterized in that**:
the dedicated command includes a rolling command that is count up or count down whenever transmission occurs;
when the receiving means (32) receives the dedicated command including the rolling counter that is count up whenever transmission occurs and the rolling counter in the dedicated command received by the receiving means (32) in the reception disablement mode (Mb) is greater than a portable device counter stored in a memory (35), the controlling means (31) of the portable device (3) stores the rolling counter as a new portable device counter in the memory (35) and shifts the portable device (3) to the reception enablement mode (Ma); and
when the receiving means (32) receives the dedicated command including the rolling counter that is count down whenever transmission occurs and the rolling counter in the dedicated command received by the receiving means (32) in the reception disablement mode (Mb) is less than a portable device counter stored in a memory (35), the controlling means (31) stores the rolling counter as a new portable device counter in the memory (35) and shifts the portable device (3) to the reception enablement mode (Ma).

10. The electronic key system (1) according to any one of claims 3 to 9, **characterized in that**:
when the portable device (3) is in the reception enablement mode (Ma) and the first predetermined time length (T1) elapses without the receiving means (32) of the portable device (3) receiving the wireless signal (WE) and the vibration sensor (34) detecting vibration of the portable device (3), the controlling means (31) of the portable device (3) shifts the portable device (3) to the reception disablement mode (Mb) that allows the command signal (CO) transmitted from the communication peer device (2) to be received but does not allow the wireless signal (WE) to be received; and
when the portable device (3) is in reception disablement mode (Mb) and a second predetermined time length (T2), which is longer than the first predetermined time length (T1), elapses without the receiving means (32) of the portable device (3) receiving the wireless signal (WE) and the vibration sensor (34) detecting vibration of the portable device (3), the controlling means (31) shifts the portable device (3) to a complete reception disablement mode (Mc) that does not allow the receiving means (32) to receive both of the wireless signal (WE) and the command signal (CO).

11. An electronic key system (1) including the portable device (3) according to claim 1 or 2, wherein the electronic key system (1) is allowed to control the communication peer device (2) when the wireless signal (WE) transmitted from the communication peer device (2) starts and establishes bidirectional communication with the communication peer device (2) and key verification performed through the bidirectional communication authenticates the portable device (3), the electronic key system (1) being **characterized in that**:
when the portable device (3) is in the reception enablement mode (Ma) and the first predetermined time length (T1) elapses without the receiving means (32) receiving the wireless signal (WE) and the vibration sensor (34) detecting vibration of the portable device (3), the controlling means (31) of the portable device (3) is configured to transmit a query signal (QU) to the communication peer device (2) to inquire whether or not the portable device (3) can be shifted to the reception disablement mode (Mb);
when the receiving means (32) receives a shift restriction signal (DI) from the communication peer device (2) in response to the query signal (QU), the controlling means (31) of the portable device (3) is configured to maintain the portable device (3) in the reception enable mode (Ma) instead of shifting to the reception disablement mode (Mb); and
when the receiving means (32) does not receive the shift restriction signal (DI), the controlling means (31) of the portable device (3) is configured to shift the portable device (3) to the reception disablement mode (Mb).
